# EUROPEAN PATENT APPLICATION

(11) **EP 2 753 112 A1**
(43) Date of publication of application: **09.07.2014**
(21) Application number: 11866901.9
(22) Date of filing: 28.10.2011
(51) Int. Cl.: H04W 24/00

(54) **USER EQUIPMENT PROCESSING METHOD, MOBILITY MANAGEMENT ENTITY PROCESSING METHOD, USER EQUIPMENT, AND MOBILITY MANAGEMENT ENTITY AND COMMUNICATION SYSTEM**

(71) Applicant: Huawei Technologies Co., Ltd., Shenzhen, Guangdong 518129 (CN)
(72) Inventor: FANG, Zhipeng, Shenzhen Guangdong 518129 (CN)
(74) Representative: Körber, Martin Hans
(86) International application number: PCT/CN2011/081503
(87) International publication number: WO 2012/163028

(57) **Abstract**

The present invention relates to a processing method of a user equipment, including: detecting, by a user equipment in an active status, that user equipment capability of the user equipment has changed; and sending, by the user equipment, the changed user equipment capability of the user equipment to a base station. An embodiment of the present invention further provides a processing method of a mobility management entity, a user equipment, a mobility management entity, and a communications system. When the user equipment capability of the user equipment has changed, the user equipment can report the changed user equipment capability to the network side, so that the network side can timely save or stop saving power for the user equipment, thereby achieving a trade-off between power saving of the user equipment and the service quality.

## Description

### FIELD OF THE INVENTION

Embodiments of the present invention relate to the field of mobile communications technologies, and in particular, to a processing method of a user equipment, a processing method of a mobility management entity, a user equipment, a mobility management entity, and a communications system.

### BACKGROUND OF THE INVENTION

As the processing capability of a user equipment is becoming increasingly strong, it consumes an increasing amount of power. For most services in the mobile communications, data is not transmitted continuously. Therefore, sometimes the user equipment does not need to always be ready for receiving data. If the time for the user equipment to receive data is arranged properly while meeting the delay requirements of the services, the user equipment will consume less power.

There is a conflict between saving power for the user equipment and delay. Power saving may lower the service quality. In video services, for example, when power saving is achieved for the user equipment in the above-mentioned manner, the video decoding rate may be affected, and the delay may increase. When the user equipment is connected to a power supply, to meet the requirements on service quality, it is not necessary to save power for the user equipment.

In the prior art, to achieve a trade-off between power saving of the user equipment and service quality, a base station judges whether to save power for the user equipment according to the information about the user equipment; however, the information about the user equipment cannot be obtained timely.

### SUMMARY OF THE INVENTION

Embodiments of the present invention provide a processing method of a user equipment, a processing method of a mobility management entity, a user equipment, a mobility management entity, and a communications system, so as to solve the problem that a base station cannot timely obtain information about a user equipment.

The objectives of the present invention are achieved using the following technical solutions:

A processing method of a user equipment, including:
detecting, by a user equipment in an active status, whether user equipment capability of the user equipment has changed; and
when the user equipment capability of the user equipment has changed, sending, by the user equipment, the changed user equipment capability of the user equipment to a base station.

A processing method of a mobility management entity, including:
receiving, by a mobility management entity, an indication sent by a user equipment in an active status, where the indication is used to trigger the mobility management entity to send a request message to a base station, and the request message is used to request the base station to send a message for obtaining user equipment capability of the user equipment to the user equipment; and
requesting, by the mobility management entity according to the indication, the base station to send the message for obtaining the user equipment capability of the user equipment to the user equipment.

A user equipment, including:
a processor, configured to detect whether user equipment capability of the user equipment in an active status has changed; and
a transmitter, configured to send the changed user equipment capability of the user equipment to a base station when the processing unit detects that the user equipment capability of the user equipment has changed.

A mobility management entity, including:
a receiver, configured to receive an indication sent by a user equipment in an active status, where the indication is used to trigger the mobility management entity to send a request message to a base station, and the request message is used to request the base station to send a message for obtaining user equipment capability of the user equipment to the user equipment; and
a processor, configured to request, according to the indication, the base station to send the message for obtaining the user equipment capability of the user equipment to the user equipment.

A communications system, including:
a user equipment and a base station, where:
   the user equipment is configured to detect whether user equipment capability of the user equipment has changed when the user equipment is in an active status; and send the changed user equipment capability of the user equipment to the base station when the user equipment capability of the user equipment has changed; and
   the base station is configured to receive the changed user equipment capability of the user equipment sent by the user equipment.

It can be seen from the technical solutions provided in the above-mentioned embodiments of the present invention that, in the embodiments of the present invention, if the user equipment capability of the user equipment has changed, the user equipment can report the changed user equipment capability to the base station, so that the network side can timely save or stop saving power for the user equipment, thereby achieving a trade-off between power saving of the user equipment and the service quality.

### BRIEF DESCRIPTION OF THE DRAWINGS

To illustrate the technical solutions in the embodiments of the present invention more clearly, accompanying drawings required for describing the embodiments are introduced briefly below. Apparently, the accompanying drawings in the following description are merely some embodiments of the present invention, and persons of ordinary skill in the art may further obtain other drawings according to the accompanying drawings without creative efforts.
FIG. 1 is a flow chart of a method according to an embodiment of the present invention;
FIG. 2 is a flow chart of a method according to another embodiment of the present invention;
FIG. 3 is a signaling diagram of a method according to Application Embodiment 1 of the present invention;
FIG. 4 is a signaling diagram of a method according to Application Embodiment 2 of the present invention;
FIG. 5 is a schematic structural diagram of a user equipment according to still another embodiment of the present invention;
FIG. 6 is a schematic structural diagram of a mobility management entity according to still another embodiment of the present invention; and
FIG. 7 is a schematic structural diagram of a communications system according to still another embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments to be described are merely part of rather than all of the embodiments of the present invention. All other embodiments obtained by persons of ordinary skill in the art based on the embodiments of the present invention without creative effects shall fall within the protection scope of the present invention.

Various aspects are described herein with reference to a user equipment and/or a base station.

A user equipment (user equipment in English, UE for short) refers to equipment that provides a user with voice and/or data connectivity, which may be a wireless terminal or a wired terminal. The wireless terminal may be handheld equipment with wireless connection function, other processing equipment connected to a wireless modem, or a mobile terminal that communicates with one or more core networks through a wireless access network. For example, the wireless terminal may be a mobile phone (or also called "cellular" phone) or a computer with a mobile terminal. For another example, the wireless terminal may also be a portable, pocket-size, handheld, computer-integrated or vehicle-mounted mobile device. For still another example, the wireless terminal may be a mobile station (mobile station in English), an access point (access point in English), and the like. For ease of description, embodiments of the present invention are described by using a user equipment as an example.

A base station may refer to equipment that is located in an access network and communicates with wireless terminals through one or more cells by using an air interface. For example, the base station may be a base station (base transceiver station in English, BTS for short) in GSM or CDMA, a base station (NodeB in English) in WCDMA, or an evolved base station (evolutional Node B in English, eNB or e-NodeB for short) in LTE, or a base station in a later evolved network, which is not limited in the present invention.

Network scenarios in different embodiments of the present invention are applicable to a communications network that includes at least one user equipment, one base station, and one mobility management entity. When the user equipment is in an active status (active), the user equipment can maintain its communication with the base station. The base station can exchange control signaling with the mobility management entity. In addition, the base station exchanges user-plane data with a service gateway. Persons skilled in the art should understand that the base station may be a macro base station or a micro base station; however, the embodiments of the present invention are not limited thereto.

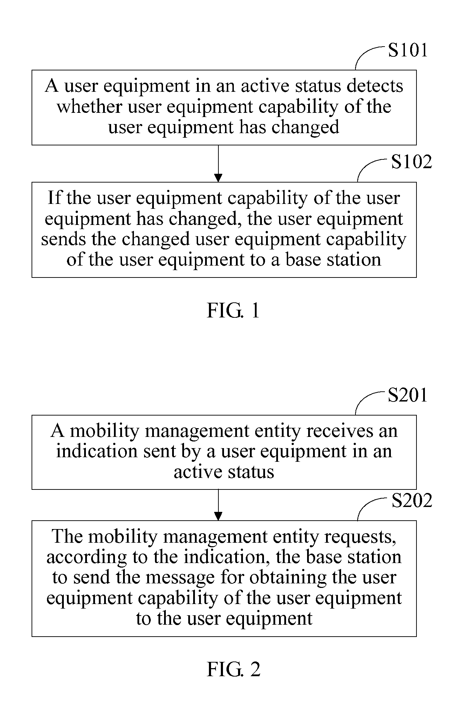

An embodiment of the present invention provides a processing method of a user equipment, as shown in FIG. 1. The method specifically includes the following operations:

S101. A user equipment in an active status detects whether user equipment capability of the user equipment has changed.

S102. When the user equipment capability of the user equipment has changed, the user equipment sends the changed user equipment capability (UE capability information) of the user equipment to a base station.

In the method provided in this embodiment of the present invention, the user equipment may actively send the changed user equipment capability of the user equipment to the base station, or trigger the base station to obtain the user equipment capability of the user equipment.

Optionally, if the user equipment triggers the base station to obtain the user equipment capability of the user equipment, before the sending, by the user equipment, the changed user equipment capability of the user equipment to the base station, the method further includes the following operations:
sending, by the user equipment, an indication to a mobility management entity, where the indication is used to trigger the mobility management entity to send a request message to the base station, and the request message is used to request the base station to send a message for obtaining the user equipment capability of the user equipment to the user equipment. Specifically, the user equipment may send a TAU (Track Area Update, track area update) message to the mobility management entity, where the TAU message carries the indication; and
receiving, by the user equipment, the message for obtaining the user equipment capability of the user equipment sent by the base station.

Optionally, the sending, by the user equipment, the changed user equipment capability of the user equipment to the base station may be specifically implemented in a manner of: after receiving the message for obtaining the user equipment capability of the user equipment sent by the base station, sending the user equipment capability of the user equipment to the base station.

Optionally, in S102, the sending, by the user equipment, the changed user equipment capability of the user equipment to the base station may be specifically implemented in a manner of: sending, by the user equipment, a radio resource control message to the base station, where the radio resource control message carries the changed user equipment capability of the user equipment.

In this embodiment, the user equipment capability of the user equipment includes at least one of the following:
a connection status between the user equipment and a power supply; and
an air interface status of the user equipment.

For example, the base station may determine whether to save power for the user equipment according to the connection status between the user equipment and the power supply sent by the user equipment. When the user equipment is connected to the power supply, the base station does not save power for the user equipment; when the user equipment is disconnected from the power supply, the base station may save power for the user equipment.

For another example, the base station may determine whether to save power for the user equipment according to the air interface status of the user equipment sent by the user equipment. When the air interface status of the user equipment is good, the base station does not save power for the user equipment; when the air interface status of the user equipment is normal, the base station may save power for the user equipment. Persons skilled in the art should understand that the base station can selectively save power for the user equipment according to the user equipment capability, which is not limited in the present invention.

In the method provided in this embodiment of the present invention, a user equipment in an active status can timely detect its user equipment capability, and, if its user equipment capability has changed, timely report the changed user equipment capability to a base station, so that the base station can timely save or stop saving power for the user equipment, thereby achieving a trade-off between power saving of the user equipment and the service quality.

An embodiment of the present invention further provides a processing method of a mobility management entity, as shown in FIG. 2. The method describes in detail the preceding embodiment from the perspective of a mobility management entity, and includes:

S201. A mobility management entity receives an indication sent by a user equipment in an active status, where the indication is used to trigger the mobility management entity to send a request message to a base station, and the request message is used to request the base station to send a message for obtaining user equipment capability of the user equipment to the user equipment.

Optionally, S201 may be specifically implemented in a manner of: receiving, by the mobility management entity, a TAU message sent by the user equipment, where the TAU message carries the indication.

Regarding S201, reference may be made to the preceding embodiment, so the details will not be described herein again.

S202. The mobility management entity requests, according to the indication, the base station to send the message for obtaining the user equipment capability of the user equipment to the user equipment.

Further, the processing method of a mobility management entity provided in this embodiment of the present invention includes: receiving, by the mobility management entity, the user equipment capability of the user equipment forwarded by the base station.

In this embodiment of the present invention, the user equipment capability of the user equipment may include, but is not limited to, at least one of the following:
a connection status between the user equipment and a power supply; and
an air interface status of the user equipment.

Regarding the user equipment capability, reference may be made to the preceding embodiment, so the details will not be described herein again.

In the method provided in this embodiment of the present invention, a user equipment in an active status can timely detect its user equipment capability, and, if its user equipment capability has changed, timely report the changed user equipment capability to a base station, so that the base station can timely save or stop saving power for the user equipment, thereby achieving a trade-off between power saving of the user equipment and the service quality.

Specific implementation manners of the methods provided in the preceding embodiments of the present invention during practical application will be described in detail in the following.

### Application Embodiment 1

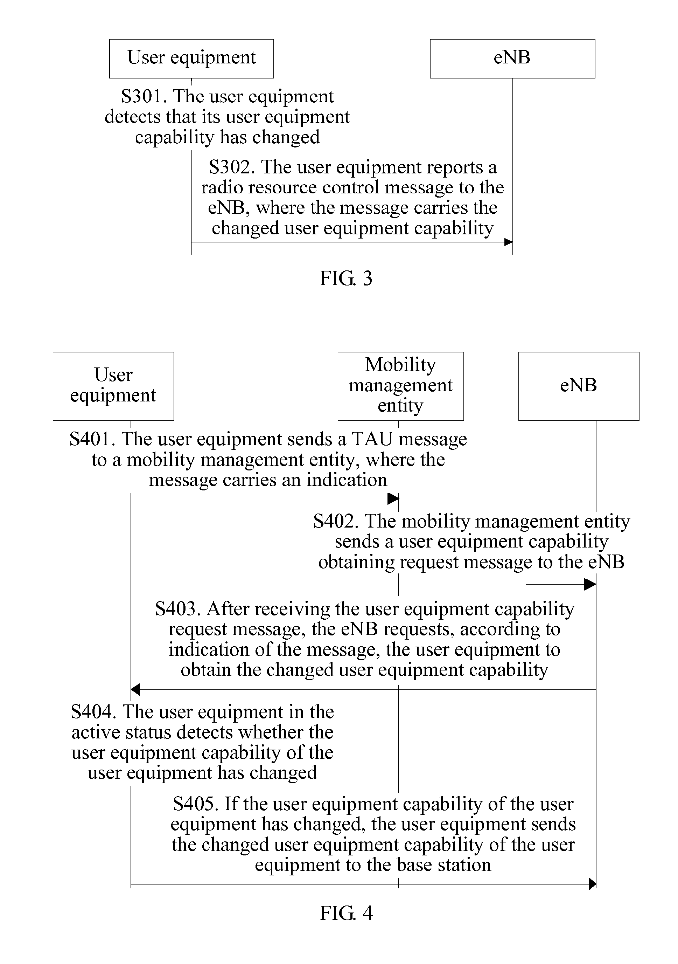

In an LTE network, if a base station is an eNB, and a user equipment is in an active status, Application Embodiment 1 is specifically implemented in a manner shown in FIG. 3, including:

S301. The user equipment detects that its user equipment capability has changed.

Specifically, the user equipment may, but is not limited to, detect its connection status with a power supply and a change to an air interface status of the user equipment. If the user equipment capability of the user equipment has changed, the user equipment can timely detect the change.

S302. The user equipment reports a radio resource control message to the eNB, where the message carries the changed user equipment capability.

For illustrative but not limiting purpose, the radio resource control message may carry the changed user equipment capability. Definitely, other messages may also be used to carry the changed user equipment capability.

In this embodiment, the base station can learn a change to the user equipment capability of the user equipment in real time, and timely perform corresponding processing. For example, if the changed user equipment capability indicates that power saving is required for the user equipment, the base station prolongs the time interval for sending service data to the user equipment while meeting service delay requirements, so that the user equipment prolongs the time interval for receiving service data by the user equipment, thereby saving power. If the changed user equipment capability indicates that power saving is not required for the user equipment, the base station sets a relatively long time for the user equipment to continuously send service data, thereby ensuring the service quality.

### Application Embodiment 2

In an LTE network, if a user equipment is in an active status, Application Embodiment 2 is specifically implemented in a manner shown in FIG. 4, including:

S401. The user equipment sends a TAU message to a mobility management entity, where the message carries an indication.

For illustrative but not limiting purpose, in Application Embodiment 2, the indication is a ue radio capability information update needed (ue radio capability information update needed) information element in the TAU message, where the information element is used to request an eNB to send a message for obtaining changed user equipment capability of the user equipment to the user equipment.

S402. The mobility management entity sends a ue capability request (user equipment capability obtaining request) message to the eNB.

Optionally, the ue capability request may be a newly added message. For illustrative but not limiting purpose, the format of the message is as follows:

| IE/Group Name (IE/Group Name) | Range (Range) | IE type and reference (IE type and reference) | Semantics description (Semantics description) |
|---|---|---|---|
| ue capability request | Enumerated value: 0 or 1 | Newly added | If the value is 1, it indicates that the eNB needs to re-obtain the user equipment capability. |
| | | | If the value is 0, it indicates that the eNB does not need to re-obtain the user equipment capability. |

S403. After receiving the ue capability request message, the eNB requests, according to indication of the message, the user equipment to obtain the changed user equipment capability.

S404. The user equipment in the active status detects whether the user equipment capability of the user equipment has changed.

S405. If the user equipment capability of the user equipment has changed, the user equipment sends the changed user equipment capability of the user equipment to the base station.

Specifically, the user equipment may, but is not limited to, detect its connection status with a power supply and a change to an air interface status of the user equipment. If the user equipment capability of the user equipment has changed, the user equipment can timely detect the change.

In this embodiment, the network side can learn a change to the user equipment capability of the user equipment in real time, and timely perform corresponding processing. For example, if the changed user equipment capability indicates that power saving is required for the user equipment, the network side prolongs the time interval for sending service data to the user equipment while meeting service delay requirements, so that the user equipment prolongs the time interval for receiving service data by the user equipment, thereby saving power. If the changed user equipment capability indicates that power saving is not required for the user equipment, the network side sets a relatively long time for the user equipment to continuously send service data, thereby ensuring the service quality.

All or part of the steps of the method according to the embodiments may be implemented by a program instructing relevant hardware. The program may be stored in a computer readable storage medium. When the program is executed, the steps of the method according to the embodiments are performed. The storage medium may be any medium that is capable of storing program code, such as a ROM, a RAM, a magnetic disk, or a compact disc.

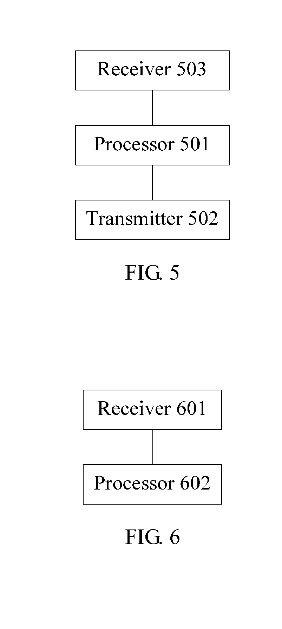

An embodiment of the present invention further provides a user equipment. The specific structure of the user equipment is shown in FIG. 5, including:
a processor 501, configured to detect whether user equipment capability of the user equipment in an active status has changed; and
a transmitter 502, configured to send the changed user equipment capability of the user equipment to a base station when the processing unit detects that the user equipment capability of the user equipment has changed.

The user equipment capability of the user equipment may include, but is not limited to, at least one of the following:
a connection status between the user equipment and a power supply; and
an air interface status of the user equipment.

The user equipment provided in this embodiment of the present invention may actively report the changed user equipment capability of the user equipment, or trigger the base station to obtain the changed user equipment capability.

If the user equipment actively reports the changed user equipment capability of the user equipment, the transmitter 502 may be specifically configured to: send a radio resource control message to the base station, where the radio resource control message carries the changed user equipment capability of the user equipment.

If the user equipment triggers the network side to obtain the changed user equipment capability, the user equipment provided in this embodiment of the present invention further includes a receiver 503, configured to receive a message for obtaining the user equipment capability of the user equipment sent by the base station.

Optionally, the transmitter 502 is further configured to: send an indication to a mobility management entity, where the indication is used to trigger the mobility management entity to send a request message to the base station, and the request message is used to request the base station to send the message for obtaining the user equipment capability of the user equipment to the user equipment.

Optionally, the transmitter 502 is configured to send a track area update message to the mobility management entity, where the track area update message carries the indication.

The user equipment provided in this embodiment can be configured to perform the actions of the user equipment in the preceding method embodiment. For example, the processor can be configured to perform the actions in S101 in the preceding method embodiment, and the transmitter can be configured to perform the actions in S102 in the preceding method embodiment.

In this embodiment, the user equipment can detect its user equipment capability, and, if its user equipment capability has changed, timely report the changed user equipment capability to the network side, so that the network side can timely save or stop saving power for the user equipment, thereby achieving a trade-off between power saving of the user equipment and the service quality.

An embodiment of the present invention further provides a mobility management entity. The specific structure of the mobility management entity is shown in FIG. 6, including a receiver 601 and a processor 602.

The receiver 601 is configured to receive an indication sent by a user equipment in an active status, where the indication is used to trigger the mobility management entity to send a request message to a base station, and the request message is used to request the base station to send a message for obtaining user equipment capability of the user equipment to the user equipment.

For illustrative but not limiting purpose, the receiver is specifically configured to receive a track area update message sent by the user equipment, where the track area update message carries the indication.

The processor 602 is configured to request, according to the indication, the base station to send the message for obtaining the user equipment capability of the user equipment to the user equipment.

Optionally, the receiver 601 is further configured to receive the user equipment capability of the user equipment forwarded by the base station.

The mobility management entity provided in this embodiment can be configured to perform the actions of the mobility management entity in the preceding method embodiment. For example, the receiver can be configured to perform the actions in S201 in the preceding method embodiment, and the processor can be configured to perform the actions in S202 in the preceding method embodiment.

In this embodiment of the present invention, after receiving an indication sent by a user equipment in an active status, the mobility management entity requests a base station to obtain the user equipment capability of the user equipment, so that the network side can timely save or stop saving power for the user equipment, thereby achieving a trade-off between power saving of the user equipment and the service quality.

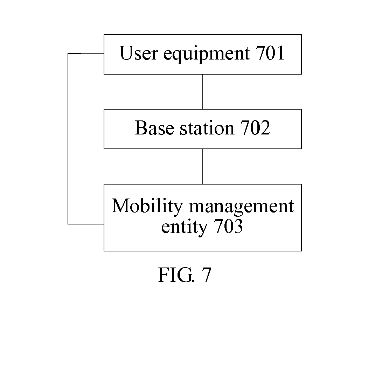

An embodiment of the present invention further provides a communications system. The specific structure of the communications system is shown in FIG. 7, including:
a user equipment 701 and a base station 702.

The user equipment 701 is configured to detect that user equipment capability of the user equipment has changed when the user equipment is in an active status, and send the changed user equipment capability of the user equipment to the base station.

The base station 702 is configured to receive the changed user equipment capability of the user equipment sent by the user equipment 701.

In the communications system provided in this embodiment of the present invention, the user equipment may be further configured to receive a message for obtaining the user equipment capability of the user equipment sent by the base station.

Optionally, the communications system provided in this embodiment of the present invention may further include a mobility management entity 703, configured to receive an indication sent by the user equipment 701, where the indication is used to trigger the mobility management entity 703 to send a request message to the base station 702, and the request message is used to request the base station 702 to send the message for obtaining the user equipment capability of the user equipment to the user equipment 701.

The user equipment capability of the user equipment may include, but is not limited to, at least one of the following:
a connection status between the user equipment and a power supply; and
an air interface status of the user equipment.

In this embodiment, the network side can learn a change to the capability of the user equipment in real time, and timely save or stop saving power for the user equipment, thereby achieving a trade-off between power saving of the user equipment and the service quality.

Persons skilled in the art should understand that modules in a device according to an embodiment may be distributed in the device of the embodiment according to the description of the embodiment, or may be correspondingly changed to be disposed in one or more devices different from this embodiment. In addition, the modules of the embodiment may be combined into one module, or further split into multiple submodules.

Persons skilled in the art should understand that the modules of the devices according to the embodiments of the present invention are divided by functions, and that in practice, the functional modules may be separated or combined for the specific structure.

The sequence numbers of the above embodiments are merely for the convenience of description, and do not imply the preference among the embodiments.

The solutions disclosed in the claims also fall within the protection scope of the embodiments of the present invention.

The preceding embodiments are intended for describing the technical solutions of the present invention rather than limiting the present invention. Although the present invention is described in detail with reference to the foregoing embodiments, persons of ordinary skill in the art should understand that they can still make modifications to the technical solutions described in the foregoing embodiments or make equivalent substitutions to some technical features thereof, as long as such modifications or replacements do not cause the essence of the corresponding technical solutions to depart from the scope of the technical solutions of the embodiments of the present invention.

## Claims

1. A processing method of a user equipment, comprising:
detecting, by a user equipment in an active status, whether user equipment capability of the user equipment has changed; and
when the user equipment capability of the user equipment has changed, sending, by the user equipment, the changed user equipment capability of the user equipment to a base station.

2. The method according to claim 1, further comprising:
receiving, by the user equipment, a message for obtaining the user equipment capability of the user equipment sent by the base station.

3. The method according to claim 2, further comprising:
sending, by the user equipment, an indication to a mobility management entity, wherein the indication is used to trigger the mobility management entity to send a request message to the base station, and the request message is used to request the base station to send the message for obtaining the user equipment capability of the user equipment to the user equipment.

4. The method according to claim 3, wherein the sending, by the user equipment, the indication to the mobility management entity comprises:
sending, by the user equipment, a track area update message to the mobility management entity, wherein the track area update message carries the indication.

5. The method according to any one of claims 1 to 4, wherein the sending, by the user equipment, the changed user equipment capability of the user equipment to the base station comprises:
sending, by the user equipment, a radio resource control message to the base station, wherein the radio resource control message carries the changed user equipment capability of the user equipment.

6. The method according to any one of claims 1 to 5, wherein the user equipment capability of the user equipment comprises at least one of the following:
a connection status between the user equipment and a power supply; and
an air interface status of the user equipment.

7. A processing method of a mobility management entity, comprising:
receiving, by a mobility management entity, an indication sent by a user equipment in an active status, wherein the indication is used to trigger the mobility management entity to send a request message to a base station, and the request message is used to request the base station to send a message for obtaining user equipment capability of the user equipment to the user equipment; and
requesting, by the mobility management entity according to the indication, the base station to send the message for obtaining the user equipment capability of the user equipment to the user equipment.

8. The method according to claim 7, further comprising:
receiving, by the mobility management entity, the user equipment capability of the user equipment forwarded by the base station.

9. The method according to claim 7 or 8, wherein the receiving, by the mobility management entity, the indication sent by the user equipment in the active status comprises:
receiving, by the mobility management entity, a track area update message sent by the user equipment, wherein the track area update message carries the indication.

10. A user equipment, comprising:
a processor, configured to detect whether user equipment capability of the user equipment in an active status has changed; and
a transmitter, configured to send the changed user equipment capability of the user equipment to a base station when the processing unit detects that the use equipment capability of the user equipment has changed.

11. The user equipment according to claim 10, further comprising:
a receiver, configured to receive a message for obtaining the user equipment capability of the user equipment sent by the base station.

12. The user equipment according to claim 11, wherein
the transmitter is further configured to send an indication to a mobility management entity, wherein the indication is used to trigger the mobility management entity to send a request message to the base station, and the request message is used to request the base station to send the message for obtaining the user equipment capability of the user equipment to the user equipment.

13. The user equipment according to claim 12, wherein
the transmitter is further configured to send a track area update message to the mobility management entity, wherein the track area update message carries the indication.

14. The user equipment according to any one of claims 10 to 13, wherein
the transmitter is further configured to send a radio resource control message to the base station, wherein the radio resource control message carries the changed user equipment capability of the user equipment.

15. The user equipment according to any one of claims 10 to 14, wherein the user equipment capability of the user equipment comprises at least one of the following:
a connection status between the user equipment and a power supply; and
an air interface status of the user equipment.

16. A mobility management entity, comprising:
a receiver, configured to receive an indication sent by a user equipment in an active status, wherein the indication is used to trigger the mobility management entity to send a request message to a base station, and the request message is used to request the base station to send a message for obtaining user equipment capability of the user equipment to the user equipment; and
a processor, configured to request, according to the indication, the base station to send the message for obtaining the user equipment capability of the user equipment to the user equipment.

17. The mobility management entity according to claim 16, wherein:
the receiver is further configured to receive the user equipment capability of the user equipment forwarded by the base station.

18. The mobility management entity according to claim 16 or 17, wherein:
the receiver is further configured to receive a track area update message sent by the user equipment, wherein the track area update message carries the indication.

19. A communications system, comprising:
a user equipment and a base station, wherein
the user equipment is configured to detect whether user equipment capability of the user equipment has changed when the user equipment is in an active status; and send the changed user equipment capability of the user equipment to the base station when the user equipment capability of the user equipment has changed; and
the base station is configured to receive the changed user equipment capability of the user equipment sent by the user equipment.

20. The communications system according to claim 19, wherein
the user equipment is further configured to receive a message for obtaining the user equipment capability of the user equipment sent by the base station.

21. The communications system according to claim 19 or 20, further comprising:
a mobility management entity, configured to receive an indication sent by the user equipment, wherein the indication is used to trigger the mobility management entity to send a request message to the base station, and the request message is used to request the base station to send the message for obtaining the user equipment capability of the user equipment to the user equipment.

22. The communications system according to any one of claims 19 to 21, wherein the user equipment capability of the user equipment comprises at least one of the following:
a connection status between the user equipment and a power supply; and
an air interface status of the user equipment.
